(19) Europäisches Patentamt
European Patent Office
Office européen des brevets

(11) **EP 3 240 984 B1**

(12) **EUROPEAN PATENT SPECIFICATION**

(45) Date of publication and mention
of the grant of the patent:
**22.05.2019 Bulletin 2019/21**

(51) Int Cl.:
*F26B 3/12* (2006.01)    *B05B 1/30* (2006.01)
*B05B 1/34* (2006.01)

(21) Application number: **15817870.7**

(22) Date of filing: **23.12.2015**

(86) International application number:
**PCT/EP2015/081224**

(87) International publication number:
**WO 2016/107817 (07.07.2016 Gazette 2016/27)**

(54) **SPRAY NOZZLE APPARATUS FOR SPRAY-DRYING APPLICATIONS**

SPRITZDÜSE FÜR SPRÜHTROCKNUNGANWENDUNGEN

BUSE DE PULVÉRISATION POUR DES APPLICATIONS DE SÉCHAGE PAR PULVÉRISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2014 EP 14200754**

(43) Date of publication of application:
**08.11.2017 Bulletin 2017/45**

(73) Proprietor: **Nestec S.A.
1800 Vevey (CH)**

(72) Inventors:
• **ERDMANN, Peter**
**3006 Bern (CH)**
• **FANKHAUSER, Peter**
**3510 Konolfingen (CH)**
• **NYDEGGER, Martin**
**3510 Konolfingen (CH)**
• **SANDERS, Dale Richard**
**1796 Courgevaux (CH)**
• **STRANZINGER, Michael**
**3110 Münsingen (CH)**
• **WALTHERT, Gerhard**
**3672 Aeschlen (CH)**
• **SCHMIED, Christian**
**"deceased" (CH)**

(74) Representative: **Künzi, Sophie
Nestec S.A.
Avenue Nestlé 55
1800 Vevey (CH)**

(56) References cited:
WO-A1-97/48496          DE-A1- 19 617 685
DE-C- 935 495            US-A- 3 981 957
US-A1- 2010 132 439

**Description**

The present invention is directed to a single phase spray nozzle apparatus for spray-drying applications comprising a nozzle provided with at least one nozzle orifice for outputting spray droplets of a product to be dried and at least one inlet orifice for transferring said product into a nozzle chamber and having an apparatus for adjusting the size of outputted droplets inline during the pray-drying process. The invention also relates to a spray-drying apparatus comprising such a spray nozzle and a spray-drying process in which such a spray nozzle is used.

The manufacturing of food powders is realized to a great extent by means of spray drying. This process converts emulsions, suspensions and dispersions into powder. Spray nozzles create droplets, which are dried in hot air by evaporating water. The final powder quality, the final powder texture, the dryer process design, the drying efficiency, the walls fouling behaviour, the operational safety, to name only a few characteristics, are directly linked to the spray quality and thus the atomization process.

A variety of nozzles can be used. Single phase nozzles are advantageous because, no addition of liquid or gas is required to support the atomization of the product to be spray-dried. However, atomization of high viscosity products is more difficult with such single phase nozzles.

Known spray drying processes use atomization nozzles with fixed geometries which cannot be adjusted inline to the process and product conditions during start-up, manufacturing operation and shut-down. Instead operators change the nozzle geometries prior to the production cycle without the possibility to cover all the manufacturing situations. Such nozzles are chosen according to water tables. The manufacturing of food powders happens at significantly higher viscosities compared to water. In addition, it is desired to carry out the spray-drying process with the highest possible total solid content in order to reduce the cost and energy consumption of the process. Increasing the total solids in turn increases the viscosity of the product to be spray-dried. Typical spray viscosities of foods concentrate with high total solids are within a range comprised between 1 to 1000 mPa·s. There is no known single phase nozzle apparatus capable to compete with such a wide range and in particular with the highest viscosities.

As an example, for dairy emulsions at concentrate total solids above 50%, the concentrate viscosity increases in an exponential slope with further increase of total solids. This fact causes problems to spray-drying, if the concentrate viscosity exceeds a design limit of the single phase atomizer nozzles. The design limit is described by means of an atomizer air-core break-down, which stops the creation of droplets and thus stops efficient spray-drying and agglomeration of powders with a required texture. Using prior art spray nozzle apparatus, air-core break downs within atomizer nozzles cannot be determined visually, thus there is currently no means to operate the spray-drying process at its best point without facing issues, such as powder blockages in cones and cyclones, wall fouling or atomizer beard formation, to name just a few issues.

Different spray nozzles are disclosed in US 3981957 A, WO 9748496 A1 and US 2010132439 A1.

From WO 2007/071235 A1 there is known a nozzle arrangement and a method of mounting the nozzle arrangement in the wall of a spray drying apparatus.

This known nozzle arrangement comprises a longitudinally extending nozzle lance through which material to be dried can be fed to the nozzle orifice where it gets outputted in the form of droplets by a stream of drying gas of a suitable kind.

At a longitudinal end of the known nozzle arrangement there are arranged two discs which can be rotated in a manner relative to one another. Both of the discs comprise a tapered inner cross section such that a rotation of the discs relatively to each other makes the distance between the discs becoming greater or smaller.

Since the upper one of these two discs is in abutment to a nozzle tube which in turn carries the nozzle lance, the distance between the end of the nozzle lance and the nozzle orifice can be varied. Before starting the production process with this known nozzle arrangement the two discs are rotated relative to each other to adjust the above-mentioned distance.

Thus this known nozzle arrangement is similar to the nozzle arrangement as described above in so far as the nozzle arrangement has to be adjusted before the beginning of the manufacturing process and can not be readjusted without an interruption of the manufacturing process.

Since however the product and process conditions change from start-up to shut-down of the process the quality of the product achieved varies and product build-up can happen on the nozzle itself and the walls of the drying chamber.

There is therefore a need for a spray nozzle apparatus which helps to avoid these drawbacks.

According to a first aspect of the invention there is provided a single phase spray nozzle apparatus for a spraying apparatus comprising a nozzle provided with at least one nozzle orifice for outputting spray droplets of a product to be dried and at least one inlet orifice for transferring said product into a nozzle chamber, characterized by an apparatus for adjusting the size of outputted droplets inline during the spray drying process, characterized in that the apparatus comprises a plunger for adjusting the volume of said nozzle chamber based on spray drying process parameters and product parameters obtained inline during the spray drying process, further characterized in that the walls of the nozzle chamber do not have a turbulence generating surface and in that the product to be dried has a viscosity comprised between 1 and 1000 mPa·s, preferably between 20 and 1000 mPa·s.

This means that the spray nozzle apparatus according to the invention gives an inline means to control spray droplet sizes during spray drying. The spray quality can be judged in terms of the droplet size distribution and its corresponding droplet size mean diameter, i.e. the Sauter diameter $D_{32}$.

The spray nozzle according to the invention helps to achieve the following main manufacturing objectives: a minimum Sauter diameter for fastest and equilibrium water evaporation, an optimum powder agglomeration for consistent powder quality, an equilibrium powder particle size distribution for consistent powder quality, the elimination of scorched particles for consistent powder quality, minimal powder wall fouling, minimal spray nozzle fouling and increased dryer safety because of the elimination of dripping and elimination of scorched particles, as well as an operation window for the atomizing nozzles, to spray within the design limits without exceeding the so called air-core break-down.

According to the invention, the apparatus comprises means for adjusting the nozzle chamber geometry based on spray drying process parameters, like spray mass flow rate, spray pressure and product parameters, like product density, product shear viscosity, which parameters are obtained or evaluated inline during the spray drying process.

Thus it is possible to adjust the nozzle geometry inline on the basis of parameters responsible for the process yield and the quality of the product achieved. Furthermore the downtimes of a spray drying apparatus equipped with a spray nozzle apparatus according to the invention can be reduced since cleaning times are cut significantly thanks to minimised equipment fouling.

It is further advantageous that the walls of the nozzle chamber have no turbulence-generating surfaces as such surfaces would disturb the liquid film generation within the swirl chamber and thus disturb the control of the droplet size.

The nozzle apparatus according to the invention is provided with an electrical drive adjusting the chamber geometry, the drive being controlled by a control device on the basis of spray drying process parameters and product parameters as mentioned above. To modify the chamber geometry, according to invention, the apparatus comprises a plunger for adjusting the volume of the nozzle swirl-chamber.

By moving the plunger into and out of the nozzle chamber by the electric drive an adjustment of the height of the nozzle swirl-chamber is achieved. Thus by moving the plunger, the geometry of the nozzle chamber can be modified inline during the manufacturing process in relation to the product and process parameters as mentioned above.

Movement of the plunger can be achieved by the electric drive which in turn is controlled by a control device like a programmable circuit. This circuit transmits control signals to the electric drive as a function of the above-mentioned parameters.

In order to achieve the above, according to an advantageous embodiment of the invention the electric drive comprises an electric motor rotatably driving an output shaft, the rotation being transformed into a longitudinal motion of the plunger via a threaded engagement between the output shaft and the plunger. Thus a mechanical stable and easy to handle configuration is achieved.

According to an embodiment of the invention, a connecting sleeve is provided which is releasably fixed to the electric drive and is equipped with a longitudinal bore for rotatably accommodating a hollow shaft which transfers the rotating motion of an output shaft of the electric drive to an adjusting pin driving the plunger axially into and out of the nozzle chamber.

The adjusting pin is provided with a longitudinally extending bore with an inner thread in engagement with an outer thread of the plunger such that a rotating motion of the adjusting pin is transformed in to a longitudinal motion of the axially movable plunger.

According to an advantageous embodiment of the invention, the nozzle chamber is provided by a swirl chamber body being inserted into an inner chamber of a nozzle body, the nozzle body being releasably fixed to the connecting sleeve mentioned above and the swirl chamber body is provided with an opening channel which is arranged in correspondence to the orifice for entering the material into the swirl chamber of the swirl chamber body. This material can for example be a paste for the production of dairy and nutrition products.

According to the invention, the swirl chamber is provided with a helicoidally tightening guiding face for accelerating the paste into the direction of the nozzle orifice to output the material droplets with high speed. Since the material is incompressible, by the adjustable movement of the plunger within the swirl chamber the cone angle of the spray cone and the droplet diameter can be modified according to the product and process parameters inline during the manufacturing process of the product to be achieved.

According to an advantageous embodiment of the invention, the orifice for inducing the material into the nozzle chamber extends radially to the longitudinal axis of the nozzle and the product material is being transferred to the nozzle via a tube being connected to the orifice.

To enable a basic modification of the output characteristics of the spray nozzle, the nozzle body is equipped with a releasably mounted orifice plate such that the opening diameter of the nozzle orifice is variable by replacing the orifice plate by a different diameter orifice plate.

According to a preferred characteristic, a cone angle of a spray mist produced by product droplets and the droplet size are variable by axially moving the plunger relative to the nozzle chamber.

The spray nozzle of the invention allows controlling of the process in an automated way, which enables to operate the atomization of spray-dryers within the design limits. As a consequence a better and more consistent process performance is achieved, with reduced rework and more consistent powder quality properties. The spray nozzle of the invention, which provides active atomization control preferably triggered by an automation control software has been identified to achieve best-point operation of spray-dryers.

According to a second aspect, the invention provides a spray-drying apparatus comprising a spray nozzle of the invention as described herein and further comprising an inline differential pressure drop measuring apparatus for continuous determination of the shear viscosity ($\eta$) of a product paste having a viscosity in the range of 1 to 1000 mPa·s, provided in a bypass to the processing line upstream of the spray nozzle.

In an advantageous embodiment, the bypass comprises a pump, a flow meter, a differential pressure tube and optionally a pulsation damper. In another preferred embodiment, in the bypass, the shear rate is greater than $1000s^{-1}$ and the Reynolds number is smaller than 2300.

The shear viscosity is used as input parameter to control the spray nozzle. It allows inline control of the spray nozzle. Thus, it allows inline control of the spray droplet size, via a stability criterion composed of the spray mass flow rate $Q_m$, the spray pressure P the product density ($\rho$) and the product viscosity ($\eta$).

Furthermore, the control of the spray nozzle thanks to in line determination of the shear viscosity enables to achieve a consistent powder agglomeration in the product during a production cycle independent of the total amount of solid particles (TS) or independent of mass flow rate fluctuations. By this method, a process automation can be achieved through improved and simplified reproducibility and reliability of product properties for different spray-dryer types. A competitive production control is achieved via advanced design of final powder properties like powder moisture, tap density, final agglomerate size and agglomerate stability. Due to the automation the production economy and process efficiency (best-point operation) is also enhanced.

The inline differential pressure drop measuring apparatus enables inline recording of product shear viscosities e.g. of coffee and milk products before atomization with its specific product characteristics such as highly viscous (for example above 1, preferably above 20, more preferably above 100mPa·s) and shear-thinning flow behaviour (determination of 2nd Newtonian plateau viscosity ($\eta$)). The inline shear viscosity information is necessary to operate a controllable evaporator or spray-nozzle inline in order to determine the best point configuration of the evaporator or atomizer and warn in case of design limit achieved. The inline differential pressure measurement apparatus allows a calibration of the shear viscosity for Newtonian and in particular Non-Newtonian shear-thinning fluids based on laboratory rheometers.

Other techniques to measure the shear viscosity inline are either underestimating or overestimating the predefined product shear viscosities of dairy and nutrition products (via laboratory rheometer). In particular for shear-thinning fluids, the frequency-based measuring technique, the Coriolis forced measuring method and the quartz-viscosimetry method do not give the possibility to determine the 2nd Newtonian plateau viscosity of shear-thinning fluids due to the lack of information concerning the applied flow field of the method (and thus unknown shear rates).

Thus, inline recording of the so called second Newtonian plateau viscosity of Non-Newtonian food fluids is possible with the differential pressure drop measuring apparatus and thus allows calibration with predefined product shear viscosity rheograms, which are found from laboratory rheometer measurements.

In the following the invention will be described in further detail by means of an embodiment thereof and the appended drawings.

Fig. 1 shows a partial sectional side view of an embodiment of a spray nozzle apparatus according to the invention;

Fig. 2 shows a cross sectional view of a hollow shaft of the spray nozzle apparatus of Fig. 1;

Fig. 3 shows a partial sectional view of an adjusting pin;

Fig. 4 shows a front view of the swirl chamber body of the spray nozzle apparatus of Fig. 1; and

Figs. 5 and 5A depict a side view and a front view (in the direction of arrow A) of the plunger of the spray nozzle apparatus of Fig. 1.

Fig. 6 is a flow chart of a process for controlling the spray droplet size of a spray nozzle apparatus of the invention;

Fig. 7 is a flow chart of a differential pressure drop method that can be carried out with the differential pressure drop measuring apparatus as used in a preferred embodiment of the present invention;

Fig. 8 shows a principle of a differential pressure drop measuring apparatus as used in a preferred embodiment of the present invention.

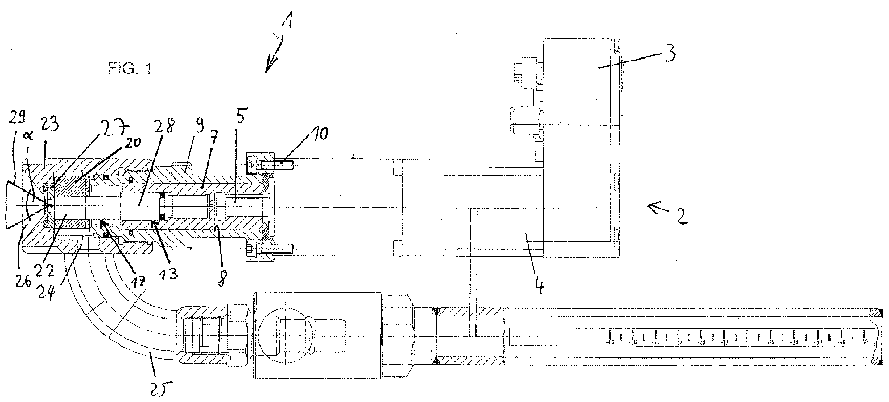

The spray nozzle apparatus 1 according to Fig. 1 comprises an electric drive 2 provided with an interface (such as a Profibus interface or Ethernet/IP interface) and a power supply (such as a 24V-DC power supply) at 3 and an electric motor 4 including a transmission connected with 3.

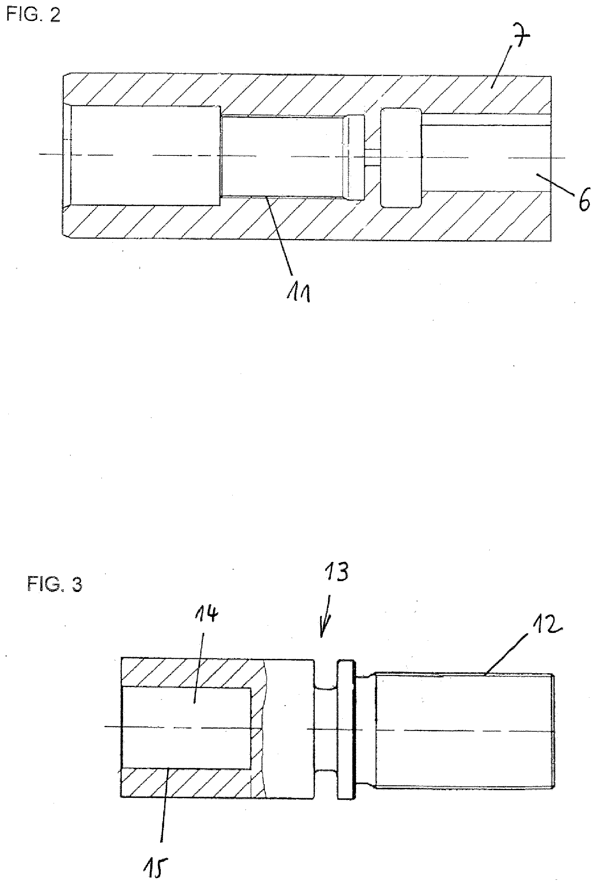

The electric motor 4 drives an output shaft 5 in a rotating manner. The output shaft 5 extends into a longitudinally extending inner bore 6 of a hollow shaft 7 which is depicted in more detail in Fig. 2.

The hollow shaft 7 is rotatably accommodated in a longitudinally extending inner bore 8 of a connecting sleeve 9 which can be fixed to the housing of transmission 4 by bolts 10.

The inner bore 6 of the hollow shaft 7 is equipped with an inner thread 11 which can be brought into a threaded engagement with an outer thread 12 provided on an end piece of an adjusting pin 13 - shown in more detail in Fig. 3 - which can be inserted into the inner bore 6 of the hollow shaft 7.

Opposite to the threaded terminal end 12 of the adjusting pin 13 there is provided a receiving section of the adjusting pin 13, which is formed with an inner bore 14 equipped with an inner thread 15.

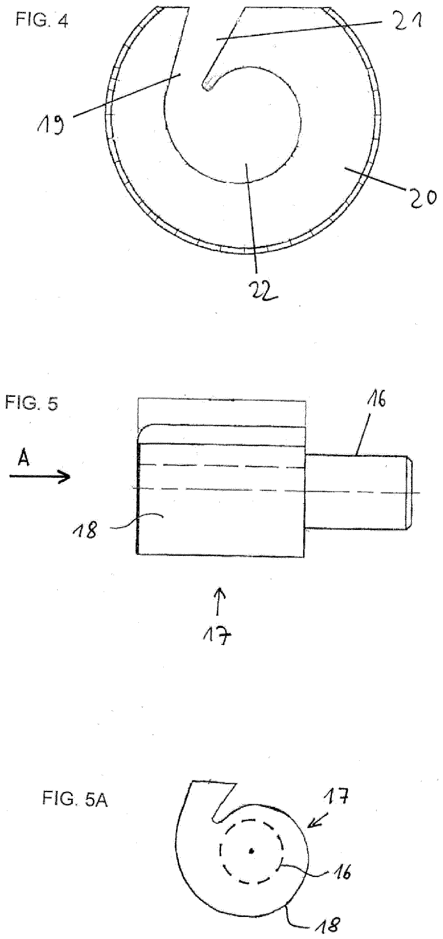

The inner thread 15 of the adjusting pin 13 serves to be brought into a threaded engagement with an outer thread 16 of a plunger 17 more clearly shown in Figs. 5 and 5A.

As can be seen from Figs. 5 and 5A, the plunger 17 comprises an outer circumferential surface section 18 with a helicoidally shaped cross section corresponding to the shape and size of a receiving section 19 of a swirl chamber body 20 accommodated in a nozzle body 23 which is mounted to the connecting sleeve 9 as shown in Fig. 4.

The swirl chamber body 20 comprises a lateral or tangential inlet channel 21 for introducing paste material or the like into the swirl chamber 22 of the swirl chamber body 20.

Material to be transported through the inlet channel 21 into the swirl chamber 22 can enter the nozzle body 23 via a first orifice 24 or inlet orifice which extends radially to the common longitudinal axis 28 of the nozzle body 23 and the connecting sleeve 9. To this end there is a tube 25 connected to the first orifice 24 of the nozzle body 23 defining an inlet opening of the apparatus 1.

Paste or paste like material delivered to the nozzle body 23 via the tube 25 enters the nozzle body 23 via the first orifice 24 and enters the swirl chamber 22 via the inlet channel 21.

The swirl chamber 22 is equipped with an axially extending through hole having an inner circumferential surface section with a helicoidally shaped cross section, thus forming a helicoidal, spiral type guiding face that serves to accelerate the material into the direction of a second orifice 26 or nozzle orifice of the nozzle body 23 defining an outlet opening of the apparatus 1. There is an orifice plate 27 provided between the axial outlet of the swirl chamber 22 and the second orifice 26 by which orifice plate 27 the opening angle of the spray cone can be adjusted.

Fig. 1 shows the plunger 17 closing the first orifice 24. Driving the motor 3 makes the hollow shaft 7 rotate and thus also makes the adjusting pin 13 rotate about its longitudinal axis. The plunger 17 is connected to the inner thread 15 of the adjusting pin 13 via the outer thread 16 and can only execute a movement relative to the swirl chamber body 20 along the longitudinal axis of the plunger 17 but can not rotate relative to the swirl chamber body 20. Thus a rotation of the adjusting pin 13 is transformed into an axial movement of the plunger 19 relative to the swirl chamber body 20.

By this movement of the plunger 18 the axial width of the first orifice 24 and the geometry of the swirl chamber 22 and thus the nozzle chamber can be modified. Since the electric drive 2 is controlled by process and product parameters which in turn are obtained or evaluated inline during the manufacturing process of the powder to be achieved, the control takes place inline with the manufacturing process of the powder. To achieve this, the control circuit provides the electric drive 2 with signals such that the plunger 17 is being moved axially in the direction of the longitudinal axis 28 as shown in Fig. 1. By this movement of the plunger 17 the spray droplet size of the material to be atomized can be adjusted towards the minimum Sauter diameter possible for a given set of input parameters.

Measuring these input parameters inline with the production process of the powder enables it to adjust the droplet size towards the minimum Sauter diameter possible inline and thus makes it possible to consider the complete range of spray viscosities during the production process of the powder to be produced.

According to the present invention, the input parameters which are measured inline with the production process are as follows: flow rate of the product into the spraying apparatus pipes towards the nozzle, pressure of the product into the pipes towards the nozzle, viscosity of the product measured in the pipes towards the nozzle, and/or finally density of the product, that is also measured in the pipes of the apparatus leading to the nozzle.

The product paste entering the swirl chamber through the inlet channel 21 follows a helicoidal and spiral way due to the spiral-type cross section design of the swirl chamber in a combined circumferential and axial direction towards the nozzle orifice 26. This design accelerates the traveling speed of the product paste flow in the swirl chamber, provided that the mass flow of the product paste is constant. The product paste is exiting the spray nozzle through the orifice plate 27 and the nozzle orifice 26 as a cone-shaped film 29 with a cone tip angle $\alpha$ wherein the film 29 atomizes into droplets forming a spray mist. The cone tip angle $\alpha$ is directly proportional to the traveling speed of the product paste in the nozzle orifice 26, i.e. the higher the traveling speed is, the larger the cone tip angle becomes and the smaller the droplets size.

A cone tip angle $\alpha$ of 0° generates no atomization and, in a realized example, a cone tip angle $\alpha$ of 100°

generates droplets having a Sauter-diameter of D32 = 30 $\mu$m. The wider the cone tip angle $\alpha$ is, the smaller the droplets become so that the droplet size can be controlled by the cone tip angle $\alpha$ and thus by the traveling speed of the product paste in the nozzle orifice 26.

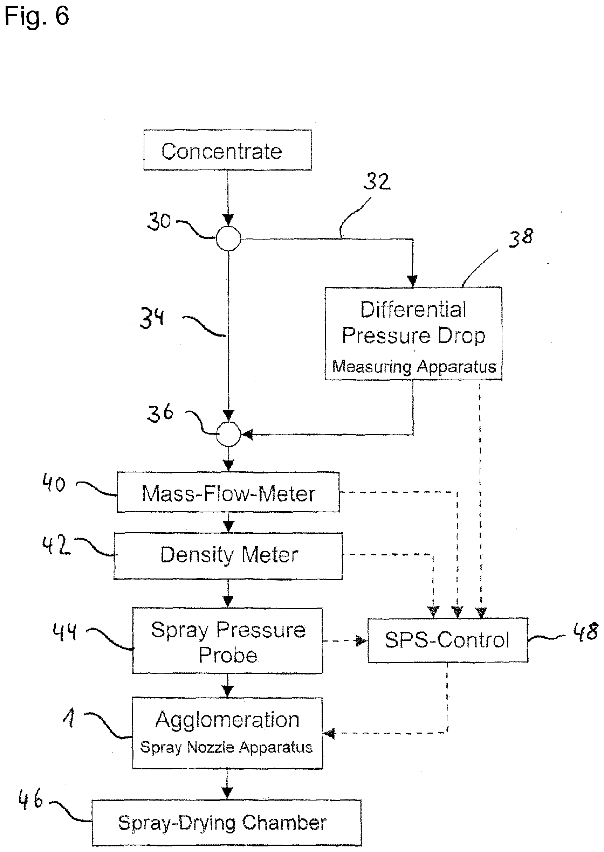

Fig. 6 is a flowchart of a process for controlling the spray droplet size of an agglomeration spray nozzle apparatus of the invention, when the processing line is provided with an inline differential pressure drop measuring apparatus. The product paste in Fig. 6 indicated as "concentrate" is delivered to a dosing point 30, which leads a part of the product paste stream into a bypass line 32. The majority of the product paste stream is directed into a main product paste line 34. The bypass line 32 is redirected into the main product paste line 34 at a line junction 36 downstream of a differential pressure drop measuring apparatus 38 provided in the bypass line 32.

Downstream of the line junction 36 a mass flow meter 40, a density meter 42 and a spray pressure probe 44 are provided in the main product paste line. Downstream of the spray pressure probe 44 the main product paste line 34 enters a spray nozzle apparatus 1 through tube 25. The product paste delivered to the spray nozzle apparatus 1 is then sprayed into a spray drying chamber 46.

The differential pressure drop measuring apparatus 38 determines the shear rate and the shear viscosity $\eta$ of the product paste delivered to the spray nozzle, according to the invention. The data of the shear rate and shear viscosity $\eta$ are delivered from the differential pressure drop measuring apparatus 38 to a control device (SPS-control) 48. In the same manner, the product paste mass flow rate $Q_m$ determined in the mass flow meter 40, the product paste density $\rho$ determined in the density meter 42 and the spray pressure P of the product paste determined in the spray pressure probe 44 are also delivered to the control device 48. The shear rate has to be greater than 1000 s$^{-1}$.

Control device 48 comprises a computer which calculates an output control parameter based on the above data delivered to the control device 48 and on the basis of known spray nozzle geometry parameters stored in a memory of the control device 48. The output control parameter is delivered to the spray nozzle apparatus 1 in order to adjust the swirl chamber piston 17 (plunger) to a calculated position in order to obtain a desired swirl chamber volume.

The following equations 1-7 describe the solving procedure how to control the plunger position (given with $h_{sc}$) based on a change in the paste shear viscosity $\eta$.

Accordingly the solving procedure is applied for a change in mass flow rate Qm and paste density $\rho$.

Universal Massflow-Characterisation of Pressure Swirl Nozzle Flows:

$$\frac{Qm}{\eta\, d_{sc}} = 2.1844 \left(\frac{d_{or}}{d_{sc}}\right)^{1.2859} \left(\frac{h_{sc}}{d_{sc}}\right)^{0.4611} \left(\frac{\sqrt{P\rho}\, d_{sc}}{\eta}\right)^{0.9140} \qquad (1)$$

The relation between spray pressure P and axial position of the plunger (given with $h_{sc}$) is derived for the example of a shear viscosity change from $\eta_{old}$ to $\eta_{new}$ :

$$\frac{\eta_{new}}{\eta_{old}} = \left(\frac{h_{sc,old}}{h_{sc,new}}\right)^{0.4611} \left(\frac{\eta_{new}}{\eta_{old}}\right)^{0.9140} \left(\frac{P_{old}}{P_{new}}\right)^{\frac{0.9140}{2}} \qquad (2)$$

Solved for the spray pressure ratio:

$$\frac{P_{old}}{P_{new}} = \left(\frac{\eta_{new}}{\eta_{old}}\right)^{\frac{1-0.9140}{0.4570}} \left(\frac{h_{sc,old}}{h_{sc,new}}\right)^{\frac{-0.4611}{0.4570}} \qquad (3)$$

In order to find a direct relation between plunger position $h_{sc}$ and shear viscosity $\eta$, the spray pressure ratio has to be found from another equation, see equations 4-6 below: Universal Spray Droplet Size Characterisation of Pressure Swirl Nozzle Sprays:

$$\frac{D_{32,global}}{d_{sc}} = 1.0798 \, Re^{-0.2987} \, We^{-0.1709} \left(\frac{h_{sc}}{d_{sc}}\right)^{-0.0772} \left(\frac{d_{or}}{d_{sc}}\right)^{0.9534} \qquad (4)$$

Again, one can derive the Spray Pressure Ratio with the consistency conditions that $D_{32\text{-global-old}}$ and $D_{32\text{-global-new}}$ remain constant:

$$\frac{D_{32,global,old}}{D_{32,global,new}} = 1 = \left(\frac{Re_{old}}{Re_{new}}\right)^{-0.2987}\left(\frac{We_{old}}{We_{new}}\right)^{-0.1709}\left(\frac{h_{sc,old}}{h_{sc,new}}\right)^{-0.0772}$$

$$= \left(\frac{h_{sc,old}}{h_{sc,new}}\right)^{-0.2987}\left(\frac{\eta_{old}}{\eta_{new}}\right)^{0.2987}\left(\frac{h_{sc,old}}{h_{sc,new}}\right)^{0.2987}\left(\frac{h_{sc,old}}{h_{sc,new}}\right)^{0.1709\cdot2}\left(\frac{h_{sc,old}}{h_{sc,new}}\right)^{-0.0772} \qquad (5)$$

And hence the solution, how to control the plunger height $h_{sc,new}$ based on a current position $h_{sc,old}$:

$$\frac{h_{sc,new}}{h_{sc,old}} = \left(\frac{\eta_{new}}{\eta_{old}}\right)^{-1.1289} \qquad (6)$$

Combining equations 3 and 6 one receives the solution, how to control the spray pressure:

$$\frac{P_{new}}{P_{old}} = \left(\frac{\eta_{new}}{\eta_{old}}\right)^{0.9508} \qquad (7)$$

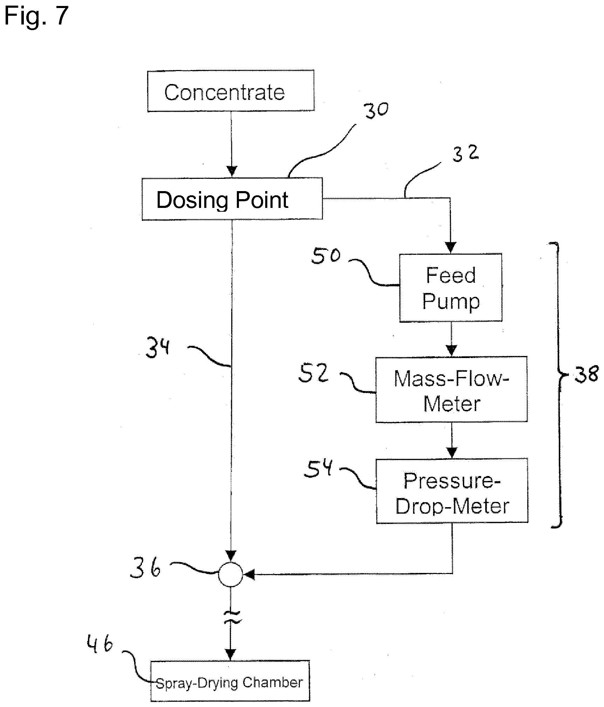

Fig. 7 is a flowchart of the differential pressure drop method that can be applied with the inline differential pressure drop measuring apparatus 38. A feed pump 50 is provided in the bypass line 32 downstream of dosing point 30. The feed pump 50 ensures a constant feed-flow-rate in the differential pressure drop measuring apparatus 38 to enable shear rates which cover the second Newtonian viscosity plateau. Downstream of the feed pump 50 a mass flow meter 52 is provided through which the product paste in the bypass line 32 is directed into a pressure drop meter 54. The shear viscosity ($\eta$) of the product paste in the bypass line 32 is calculated from the mass flow measured in the mass flow meter 52, the known product density of the product paste and the pressure drop measured in the pressure drop meter 54. This calculation is either made in a computer (not shown) of the differential pressure drop measuring apparatus 38 or, the respective data are delivered to the control device 48 and the shear viscosity $\eta$ is calculated in the computer of the control device 48. In order to consider the fact that the pressure drop is measured in a bypass line 32 the bypass mass flowrate is adjusted by the feed pump 50 until the shear-rate is above $1000s^{-1}$, so that the second Newtonian plateau viscosity can be measured by the pressure drop-meter 54 within laminar flow conditions.

A pulsation damper is also preferably provided in the bypass to reduce the noise in the pressure determination.

In the present example the dosing point 30 regulates the bypass flow rate to keep the bypass flow pressure <20 bar at laminar flow conditions, with a Reynolds number below 2300.

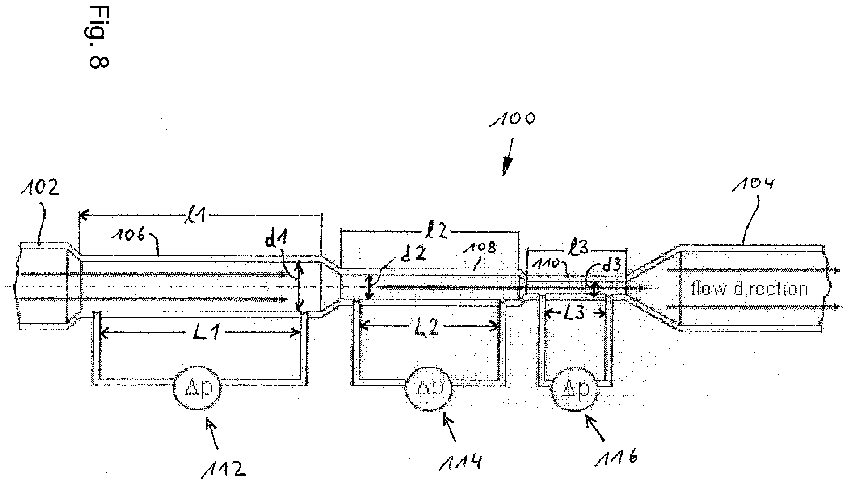

Fig. 8 shows the principle of an inline differential pressure drop measuring apparatus (pressure drop meter) that can advantageously be provided upstream of the nozzle of the invention.

The pressure drop meter 100 comprises a tube having a fluid inlet section 102 and a fluid outlet section 104 and three pressure drop measuring sections 106, 108, 110 provided between the inlet section 102 and the outlet section 104. The first pressure drop measuring section 106 which is close to the inlet section 102 has a first internal diameter $d_1$ and a first axial length $l_1$. A first differential pressure meter 112 measuring a first pressure drop $\Delta p_1$ is connected to the first pressure drop measuring section 106 in a commonly known matter wherein the axial distance $L_1$ between the two static pressure measuring openings in the wall of the first pressure drop measuring section 106 is substantially equal to the length $l_1$ of the first pressure drop measuring section 106.

The second pressure drop measuring section 108 is provided downstream of the first pressure drop measuring section 106. The internal diameter $d_2$ of the second pressure drop measuring section 108 is smaller than the diameter $d_1$ of the first pressure drop measuring section. The length $l_2$ of the second pressure drop measuring section 108 is shorter than the length of the first pressure drop measuring section 106. The second pressure drop measuring section 108 comprises a second differential pressure meter 114 measuring a second pressure drop $\Delta p_2$ wherein the distance $L_2$ between the two static pressure measuring openings in the wall of the second pressure drop measuring section 108 is shorter than the distance $L_1$ of the first differential pressure meter 112.

A third pressure drop measuring section 110 is provided downstream of the second pressure drop measuring section 108 and the third pressure drop measuring section 110 opens into the outlet section 104. The internal diameter $d_3$ of the third pressure drop measuring section 110 is smaller than the diameter $d_2$ of the second pressure drop measuring section 108 and the length $l_3$ of the third pressure drop measuring section is shorter than the length $l_2$ of the second pressure drop measuring section. The third pressure drop measuring section 110 comprises in a commonly known manner a third differential pressure meter 116 measuring a third pressure drop $\Delta p_3$. The distance $L_3$ between the two static pressure measuring openings in the wall of the third pressure drop measuring section 110 is shorter than the distance $L_2$ of the second differential pressure meter 114.

The differential pressure drop meter 100 allows the measurement of three independent pressure drop recordings of the first, the second and the third differential pressure drop meters. Utilizing these three differential pressure drop probes in series, a single mass flow rate causes three increasing wall shear rates with the decreasing tube diameter.

The following equation 8 is used to calculate the shear viscosity $\eta$ for laminar tube flows (Re<2300), applied to all 3 differential pressures $\Delta p_1$, $\Delta p_2$ and $\Delta p_3$ (respectively measured at 112, 114 and 116, figure 8), by replacing $\Delta p_i$ and the corresponding tube dimensions ($R_i$ and $L_i$) in equation 8:

Only, if the shear viscosity $\eta_i$ is equal ($\eta_1=\eta_2=\eta_3$) between the 3 differential pressures, the 2nd Newtonian shear viscosity is found and used e.g. in equation 1 and 7, etc..

$$\eta_i = \frac{\pi \cdot R_i^4 \cdot \Delta p_i \cdot \rho}{8 \cdot Qm \cdot L_i} \qquad (8)$$

with following definitions of symbols:

$R_i$: tube radius ($R_1$, $R_2$ and $R_3$) in [m]
$\Delta p_i$: tube pressure drop ($\Delta p_1$, $\Delta p_2$ and $\Delta p_3$) in [Pa]
$\rho$ : product density in [kg/m3]
Qm: mass flow rate in [kg/s]
$L_i$: tube length (distance $L_1$, $L_2$ and $L_3$) in [m]

Table 1: Abbreviations and formula

| Symbol, Abbreviation | Description | Units |
|---|---|---|
| $D_{32,global}$ | Global Sauter diameter as found from PDA measurements of spray | [m] |
| $d_{sc}$ | Swirl chamber diameter (smallest diameter of swirl chamber spiral) | [m] |
| $h_{sc}$ | Swirl chamber height (axial height of swirl chamber) | [m] |
| $d_{or}$ | Orifice diameter (diameter of opening made in orifice plate) | [m] |
| $b_{ch}$ | Width of swirl chamber inlet channel (smallest width of inlet channel which leads into the swirl chamber) | [m] |
| We | Weber number $$We = \frac{\rho_{liquid} u_{bulk}^2 d_{orifice}}{\sigma_{liquid}}$$ | - |
| Eu | Euler number $$Eu = \frac{P}{\rho_{liquid} u_{bulk}^2}$$ | - |
| Re | Reynolds number | - |

(continued)

| Symbol, Abbreviation | Description | Units |
|---|---|---|
| | $$\mathrm{Re} = \frac{\rho_{liquid} u_{bulk} h_{sc}}{\mu}$$ | |
| $u_{bulk}$ | Bulk velocity at swirl chamber inlet $$u_{bulk} = \frac{Qm}{\rho_{liquid} h_{sc} b_{ch}}$$ | [m/s] |
| Qm | Mass flow rate | [kg/s] |
| P | Spray pressure | [Pa] |
| $\rho_{liquid}$ | Liquid density | [kg/m$^3$] |
| $\eta_{liquid}$ | Liquid shear viscosity | [Pa·s] |
| $\sigma_{liquid}$ | Surface tension | [N/m] |
| PDA | Phase-Doppler Anemometry | - |

**Claims**

1. Spray-drying apparatus comprising a single phase spray nozzle (1) provided with a main product line (34), at least one nozzle orifice (26) for outputting spray droplets of a product to be dried having a viscosity comprised between 1 and 1000 mPa·s and at least one inlet orifice (24) for transferring said product into a nozzle chamber (22), **characterized by** an apparatus for adjusting the size of outputted droplets inline during the spray drying process, wherein the apparatus comprises:

   an inline differential pressure drop measuring apparatus, provided in a bypass to the main product line (34) upstream of the spray nozzle (1), for continuous determination of the shear viscosity (η) of the product;
   a mass flow meter (40) provided in the main product line (34) for measuring the flow rate of the product flowing towards the nozzle (1);
   a density meter (42) provided in the main product line (34) for measuring the density of the product flowing towards the nozzle (1);
   a spray pressure probe (44) provided in the main product line (34) for measuring the pressure of the product flowing towards the nozzle (1);
   a plunger (17) for adjusting the volume of said nozzle chamber (22), wherein said nozzle chamber (22) is equipped with an axially extending through hole having an inner circumferential surface section with a helicoidally shaped cross section;
   an electric drive (2) for moving said plunger (17) into and out of said nozzle chamber (22); and
   a control device (48) for controlling the electric drive (2) based on the measured parameters.

2. Spray-drying apparatus according to claim 1, **characterized in that** said electric drive (2) comprises an electric motor (4) rotatably driving an output shaft (5), said rotation being transformed into a longitudinal motion of said plunger (17) via a threaded engagement between said output shaft (5) and said plunger (17).

3. Spray-drying apparatus according to any one of claims 1 or 2, **characterized by** a connecting sleeve (9) being releasably fixed to said electrical drive (2) and providing a longitudinal bore for rotatably accommodating a hollow shaft (7) which transfers the rotating motion of an output shaft (5) of said electrical drive (2) to an adjusting pin (13) driving a plunger (17) into and out of said nozzle chamber (22).

4. Spray-drying apparatus according to claim 3, **characterized in that** said adjusting pin (13) is provided with a longitudinally extending axial bore (14) with an inner thread (15) in engagement with an outer thread (16) of said plunger (17) such that a rotating motion of said adjusting pin (13) is transformed into a longitudinal motion of said axially movable plunger (17).

5. Spray-drying apparatus according to claims 3 or 4, **characterized in that** said nozzle chamber (22) is provided by a swirl chamber body (20) being inserted into an inner chamber of a nozzle body (23), said nozzle body (23) being releasably fixed to said connecting sleeve (9) and said swirl chamber body (20) being provided with an opening channel (21) which is arranged in correspondence to said inlet orifice (24) for introducing said material into a swirl chamber (22) of said swirl chamber body (20).

6. Spray-drying apparatus according to any one of claims 1 to 5, **characterized in that** said inlet orifice (24) extends radially to said longitudinal axis (28) of said nozzle and said product being transferred to said nozzle via a tubing (25) being connected with said inlet orifice (24).

7. Spray-drying apparatus according to any one of claims 1 to 6, **characterized in that** said nozzle orifice (26) is equipped with a releasably mounted orifice plate (27) such that the opening diameter of said nozzle orifice (26) is variable by replacing the orifice plate (27) by a different diameter orifice plate.

8. Spray-drying apparatus according to any one of claims 1 to 7, **characterized in that** a cone angle of a spray mist produced by product droplets and the droplet size are variable by axially moving the plunger (17) relative to the nozzle chamber (22).

9. Spray-drying apparatus according to claim 8, **characterized in that** the bypass comprises a pump, a flow meter, a differential pressure tube and optionally a pulsation damper.

10. Spray-drying process comprising

   a) spraying a paste of a product by means of a spray-drying apparatus according to any one of claims 1 to 10 in a drying chamber,
   b) providing hot gas to the drying chamber to dry the product paste to a powder.

**Patentansprüche**

1. Sprühtrocknungsvorrichtung, umfassend eine Einphasen-Spritzdüse, die mit einer Hauptproduktleitung (34) bereitgestellt ist, mindestens eine Düsenöffnung (26) zum Ausstoßen von Spraytröpfchen eines zu trocknenden Produkts mit einer Viskosität zwischen 1 und 1000 mPa·s und mindestens eine Einlassöffnung (24) zum Übertragen des Produkts in eine Düsenkammer (22), **gekennzeichnet durch** eine Vorrichtung zum Einstellen der Größe von ausgestoßenen Tröpfchen in der Leitung während des Sprühtrocknungsverfahrens, wobei die Vorrichtung Folgendes umfasst:

   eine in der Leitung angeordnete Vorrichtung zur Messung des differenzialen Druckabfalls, die in einer Umgehung zur Hauptproduktleitung (34) der Spritzdüse (1) nachgeschaltet bereitgestellt ist, zur kontinuierlichen Bestimmung der Scherviskosität ($\eta$) des Produkts;
   einen Massendurchflussmesser (40), der in der Hauptproduktleitung (34) zum Messen der Durchflussrate des hin zu der Düse (1) strömenden Produkts bereitgestellt ist;
   einen Dichtemesser (42), der in der Hauptproduktleitung (34) zum Messen der Dichte des hin zu der Düse (1) strömenden Produkts bereitgestellt ist;
   eine Spritzdrucksonde (44), die in der Hauptproduktleitung (34) zum Messen des Drucks des hin zu der Düse (1) strömenden Produkts bereitgestellt ist;
   einen Kolben (17) zum Einstellen des Volumens der Düsenkammer (22), wobei die Düsenkammer (22) mit einem sich axial erstreckenden Durchgangsloch ausgestattet ist, das einen Innenumfangsflächenschnitt mit einem helikoidförmigen Querschnitt aufweist;
   einen elektrischen Antrieb (2) zum Bewegen des Kolbens (17) in die und aus der Düsenkammer (22) und eine Steuereinrichtung (48) zum Steuern des elektrischen Antriebs (2) basierend auf den gemessenen Parametern.

2. Sprühtrocknungsvorrichtung nach Anspruch 1, **dadurch gekennzeichnet, dass** der elektrische Antrieb (2) einen Elektromotor (4) umfasst, der eine Abtriebswelle (5) drehbar antreibt, wobei die Drehung über einen Gewindeeingriff zwischen der Ausgangswelle (5) und dem Kolben (17) in eine Längsbewegung 25 des Kolbens (17) umgewandelt wird.

**3.** Sprühtrocknungsvorrichtung nach einem der Ansprüche 1 oder 2, **gekennzeichnet durch** eine Anschlussmuffe (9), die lösbar an dem elektrischen Antrieb (2) befestigt ist und eine Längsbohrung zur drehbaren Aufnahme einer hohlen Welle (7) bereitstellt, die die Drehbewegung einer Abtriebswelle (5) des elektrischen Antriebs (2) auf einen Stellbolzen (13) überträgt, der einen Kolben (17) in und aus der Düsenkammer (22) antreibt.

**4.** Sprühtrocknungsvorrichtung nach Anspruch 3, **dadurch gekennzeichnet, dass** der Stellbolzen (13) mit einer sich in Längsrichtung erstreckenden axialen Bohrung (14) mit einem Innengewinde (15) bereitgestellt ist, das sich derart in Eingriff mit einem Außengewinde (16) des Kolbens (17) befindet, dass eine Drehbewegung des Stellbolzens (13) in eine Längsbewegung des axial beweglichen Kolbens (17) umgewandelt wird.

**5.** Sprühtrocknungsvorrichtung nach den Ansprüchen 3 oder 4, **dadurch gekennzeichnet, dass** die Düsenkammer (22) durch ein Wirbelkammergehäuse (20) bereitgestellt wird, die in eine innere Kammer eines Düsengehäuses (23) eingesetzt ist, wobei das Düsengehäuse (23) lösbar an der Anschlussmuffe (9) befestigt ist und das Wirbelkammergehäuse (20) mit einem Öffnungskanal (21) bereitgestellt ist, der entsprechend der Einlassöffnung (24) zum Einbringen des Materials in eine Wirbelkammer (22) des Wirbelkammergehäuses (20) angeordnet ist.

**6.** Sprühtrocknungsvorrichtung nach einem der Ansprüche 1 bis 5, **dadurch gekennzeichnet, dass** sich die Einlassöffnung (24) radial zur Längsachse (28) der Düse erstreckt und wobei das Produkt über eine Rohrleitung (25), die mit der Einlassöffnung (24) verbunden ist, an die Düse übertragen wird.

**7.** Sprühtrocknungsvorrichtung nach einem der Ansprüche 1 bis 6, **dadurch gekennzeichnet, dass** die Düsenöffnung (26) mit einer lösbar gelagerten Lochplatte (27) ausgestattet ist, so dass der Öffnungsdurchmesser der Düsenöffnung (26) durch Ersetzen der Lochplatte (27) mit einer Lochplatte eines anderen Durchmessers veränderbar ist.

**8.** Sprühtrocknungsvorrichtung nach einem der Ansprüche 1 bis 7, **dadurch gekennzeichnet, dass** ein Konuswinkel eines Sprühnebels, der durch Produkttröpfchen erzeugt wird, und die Tröpfchengröße durch axiales Bewegen des Kolbens (17) relativ zu der Düsenkammer (22) variabel sind.

**9.** Sprühtrocknungsvorrichtung nach Anspruch 8, **dadurch gekennzeichnet, dass** die Umgehung eine Pumpe, einen Durchflussmesser, ein Differenzdruckrohr und optional einen Pulsationsdämpfer umfasst.

**10.** Sprühtrocknungsverfahren, umfassend

a) das Aufsprühen einer Paste eines Produkts mittels einer Sprühtrocknungsvorrichtung nach einem der Ansprüche 1 bis 10 in einer Trocknungskammer,
b) das Zuführen von heißem Gas zu der Trocknungskammer, um die Produktpaste zu einem Pulver zu trocknen.

**Revendications**

**1.** Appareil de séchage par pulvérisation comprenant une buse de pulvérisation à phase unique pourvue d'une ligne de produit principale (34), d'au moins un orifice de buse (26) pour délivrer en sortie des gouttelettes de pulvérisation d'un produit destiné à être séché ayant une viscosité comprise entre 1 et 1000 mPa·s et d'au moins un orifice d'entrée (24) pour transférer ledit produit dans une chambre de buse (22), **caractérisé par** un appareil pour ajuster la taille des gouttelettes délivrées en sortie en ligne pendant le procédé de séchage par pulvérisation, dans lequel l'appareil comprend :

un appareil de mesure de chute de pression différentielle en ligne, fourni dans une dérivation vers la ligne de produit principale (34) en amont de la buse de pulvérisation (1), pour la détermination continue de la viscosité sous cisaillement ($\eta$) du produit ;
un débitmètre massique (40) fourni dans la ligne de produit principale (34) pour mesurer le débit du produit s'écoulant en direction de la buse (1) ;
un densimètre (42) fourni dans la ligne de produit principale (34) pour mesurer la masse volumique du produit s'écoulant en direction de la buse (1) ;
une sonde de pression de pulvérisation (44) fournie dans la ligne de produit principale (34) pour mesurer la pression du produit s'écoulant en direction de la buse (1) ;
un piston (17) pour ajuster le volume de ladite chambre de buse (22), dans lequel ladite chambre de buse (22) est équipée d'un trou traversant s'étendant axialement ayant une section de surface circonférentielle interne avec une coupe transversale en forme d'hélice ;
un entraînement électrique (2) pour déplacer ledit piston (17) vers l'intérieur et l'extérieur de ladite chambre de buse (22) ; et un dispositif de commande (48) pour commander l'entraînement électrique (2) sur la base des paramètres mesurés.

2.  Appareil de séchage par pulvérisation selon la revendication 1, **caractérisé en ce que** ledit entraînement électrique (2) comprend un moteur électrique (4) entraînant en rotation un arbre de sortie (5), ladite rotation étant transformée en un mouvement longitudinal dudit piston (17) par l'intermédiaire d'un accouplement fileté entre ledit arbre de sortie (5) et ledit piston (17).

3.  Appareil de séchage par pulvérisation selon l'une quelconque des revendications 1 ou 2, **caractérisé par** un manchon de raccordement (9) étant fixé de manière amovible audit entraînement électrique (2) et fournissant un alésage longitudinal pour recevoir de manière rotative un arbre creux (7) qui transfère le mouvement de rotation d'un arbre de sortie (5) dudit entraînement électrique (2) à une broche d'ajustement (13) entraînant un piston (17) vers l'intérieur et l'extérieur de ladite chambre de buse (22).

4.  Appareil de séchage par pulvérisation selon la revendication 3, **caractérisé en ce que** ladite broche d'ajustement (13) est pourvue d'un alésage axial s'étendant longitudinalement (14) avec un filetage interne (15) en prise avec un filetage externe (16) dudit piston (17) de telle sorte qu'un mouvement de rotation de ladite broche d'ajustement (13) est transformé en un mouvement longitudinal dudit piston mobile en sens axial (17).

5.  Appareil de séchage par pulvérisation selon la revendication 3 ou 4, **caractérisé en ce que** ladite chambre de buse (22) est fournie par un corps de chambre de tourbillonnement (20) étant inséré dans une chambre interne d'un corps de buse (23), ledit corps de buse (23) étant fixé de manière amovible audit manchon de raccordement (9) et ledit corps de chambre de tourbillonnement (20) étant pourvu d'un canal d'ouverture (21) qui est agencé en correspondance avec ledit orifice d'entrée (24) pour introduire ledit matériau dans une chambre de tourbillonnement (22) dudit corps de chambre de tourbillonnement (20).

6.  Appareil de séchage par pulvérisation selon l'une quelconque des revendications 1 à 5, **caractérisé en ce que** ledit orifice d'entrée (24) s'étend radialement vers ledit axe longitudinal (28) de ladite buse et ledit produit est transféré vers ladite buse par l'intermédiaire d'un tubage (25) étant raccordé audit orifice d'entrée (24).

7.  Appareil de séchage par pulvérisation selon l'une quelconque des revendications 1 à 6, **caractérisé en ce que** ledit orifice de buse (26) est équipé d'une plaque à orifices montée de manière amovible (27) de telle sorte que le diamètre d'ouverture dudit orifice de buse (26) est variable en remplaçant la plaque à orifices (27) par une plaque à orifices d'un diamètre différent.

8.  Appareil de séchage par pulvérisation selon l'une quelconque des revendications 1 à 7, **caractérisé en ce qu'**un angle de cône d'un brouillard de pulvérisation produit par des gouttelettes de produit et la taille de gouttelette sont variables en déplaçant axialement le piston (17) par rapport à la chambre de buse (22).

9.  Appareil de séchage par pulvérisation selon la revendication 8, **caractérisé en ce que** la dérivation comprend une pompe, un débitmètre, un tube de pression différentielle et éventuellement un atténuateur de pulsation.

10. Procédé de séchage par pulvérisation comprenant

    a) la pulvérisation d'une pâte d'un produit au moyen d'un appareil de séchage par pulvérisation selon l'une quelconque des revendications 1 à 10 dans une chambre de séchage,
    b) la fourniture de gaz chaud à la chambre de séchage pour sécher la pâte de produit en une poudre.

FIG. 1

FIG. 2

FIG. 3

FIG. 4

19

21

20

22

FIG. 5

A →

18

16

17

FIG. 5A

17

16

18

Fig. 6

Concentrate

30 32

34

36 38

Differential
Pressure Drop
Measuring Apparatus

40 Mass-Flow-Meter

42 Density Meter

44 Spray Pressure
Probe

SPS-Control 48

1 Agglomeration
Spray Nozzle Apparatus

46 Spray-Drying Chamber

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3981957 A
- WO 9748496 A1
- US 2010132439 A1
- WO 2007071235 A1